(19) **Europäisches Patentamt**
**European Patent Office**
**Office européen des brevets**

(11) **EP 4 495 857 A1**

(12) **EUROPEAN PATENT APPLICATION**

(43) Date of publication:
**22.01.2025  Bulletin 2025/04**

(51) International Patent Classification (IPC):
*G06Q 10/20* (2023.01)      *G06Q 10/0639* (2023.01)
*G06Q 10/0631* (2023.01)

(21) Application number: **24185931.3**

(22) Date of filing: **02.07.2024**

(52) Cooperative Patent Classification (CPC):
**G06Q 10/20; G06Q 10/063114; G06Q 10/06395;**
**G06Q 10/06398;** G06Q 10/06393

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **17.07.2023  US 202318353728**

(71) Applicant: **Honeywell International Inc.**
**Charlotte, NC 28202 (US)**

(72) Inventors:
- **RAI, Aman**
 **Charlotte, 28202 (US)**
- **EAMANDHI, Sai Sarada**
 **Charlotte, 28202 (US)**

- **SANDEEP, Deepika**
 **Charlotte, 28202 (US)**
- **GUPTA, Vishwanath**
 **Charlotte, 28202 (US)**
- **SOMARAJAN, Sumesh**
 **Charlotte, 28202 (US)**

(74) Representative: **Haseltine Lake Kempner LLP**
**Cheapside House**
**138 Cheapside**
**London EC2V 6BJ (GB)**

Remarks:
•The application is published incomplete as filed
(Rule 68(1) EPC).
•The references to the drawing(s) no. 4A and 4B are
deemed to be deleted (Rule 56(4)(6) EPC).

(54) **METHOD AND SYSTEM FOR IMPROVING INSPECTION, MAINTENANCE AND/OR OPERATOR EFFICIENCY OF A BUILDING MANAGEMENT SYSTEM**

(57)  Methods for improving operational efficiency include methods for improving inspection efficiency and methods for improving operator efficiency. A method includes determining an inspection efficiency of a plurality of inspectors inspecting devices of a building. A method includes determining an operator efficiency of a plurality of operators in resolving alarms generated by devices in a building. A method includes determining a device inspection score.

FIG. 1

**EP 4 495 857 A1**

**Description**

TECHNICAL FIELD

The present disclosure relates to methods and systems for improving operational efficiency of a facility and more particularly to methods and systems for improving inspection, maintenance and/or operator efficiency of a building management system of a facility.

BACKGROUND

A variety of facilities include building management systems that support operations within the facility. These systems may include, for example, security systems, HVAC (Heating, Ventilating and Air Conditioning) systems, and others. Each of these systems include devices that need to be periodically inspected and/or maintained. Moreover, during operation of these systems, alarms may be raised by any of a variety of different devices. Each of these alarms needs to be addressed and/or responded to by an operator of the system. What would be desirable are methods and systems improving inspection, maintenance and/or operator efficiency of a building management system of a facility

SUMMARY

The present disclosure relates to methods and systems for improving inspection, maintenance and/or operator efficiency of a building management system of a facility. An example may be found in a method for determining an inspection efficiency of a plurality of inspectors inspecting devices of a building management system of a building. The illustrative method includes, for each of a plurality of mobile devices carried by a respective one of the plurality of inspectors, displaying an indicator on a display of the corresponding mobile device that corresponds to each of one or more of a plurality of devices of the building, receiving a selection by the respective inspector of one of the plurality of devices via a user interface of the corresponding mobile device, and capturing a time duration taken by the respective inspector to inspect the selected device. The illustrative method includes retrieving inspection data, wherein the inspection data includes, for each of the plurality of devices of the building, a device type, a device location, and the time duration taken by the inspector to inspect the respective device. The method includes determining an inspection zone score for each of a plurality of zones of the building, wherein the inspection zone score for each of the plurality of zones represents a ratio of a number of devices having a device location that is in the respective zone over a total number of devices in the plurality of zones of the building, divided by a ratio of a time duration taken to inspect the devices having a device location that is in the respective zone over a predetermined time allocated to inspect all of the devices in the building. The inspection zone score for one or more of the plurality of zones of the building is displayed on a dashboard.

Another example may be found in a method for determining an inspection efficiency of a plurality of inspectors inspecting devices of a building automation system of a building. The method includes, for each of a plurality of mobile devices carried by a respective one of the plurality of inspectors, displaying an indicator on a display of the corresponding mobile device that corresponds to each of one or more of a plurality of devices of the building, receiving a selection by the respective inspector of one of the plurality of devices via a user interface of the corresponding mobile device, and capturing time stamps associated with inspection of the selected device. The method includes retrieving inspection data, wherein the inspection data includes, for each of a plurality of devices of the building, a device type, a device location, and the time stamps associated with the inspection of each of the plurality of devices. The method includes determining an inspection device health score for each of the plurality of devices of the building. The inspection device health score includes one or more of a device under inspection score, which represents a degree at which the respective device was under inspected relative to a predetermined inspection schedule, and a device over inspection score, which represents a degree at which the respective device was over inspected relative to the predetermined inspection schedule. The inspection device health score for one or more of the plurality of devices is displayed on a dashboard.

Another example may be found in a method for determining an operator efficiency of a plurality of operators in resolving alarms generated by devices in a building automation system of a building. The method includes retrieving device data, wherein the device data includes, for each of a plurality of devices of the building, a device type, a device location, alarms generated by the respective device, a time duration taken by the operator to resolve each alarm of the respective device, and an operator identifier that identifies a respective one of the plurality of operators that resolved each of the alarms of the device. The method includes determining an operator rank score for each of the plurality of operators, wherein each of the plurality of operators resolves a subset of the alarms generated by the plurality of devices of the building via a user interface of a monitoring station, and wherein the operator rank score for each operator represents a ratio of a cumulative time duration taken by the respective operator to resolve all of the alarms in the subset of the alarms generated by the plurality of devices of the building associated with the respective operator over a total number of alarms in the subset of the alarms generated by the plurality of devices of the building associated with the respective operator. The operator rank score for one or more of the plurality of operators is displayed on a dashboard.

Another example may be found in a method for determining an inspection efficiency of a plurality of inspectors inspecting devices of a building. The method includes retrieving inspection data, wherein the inspection data includes, for each of a plurality of devices of the building, a device type, a device location, and a time duration taken to inspect the respective device. The method includes determining an inspection zone score for each of a plurality of zones of the building, wherein the inspection zone score for each of the plurality of zones represents a relative inspection efficiency for inspecting the devices that have a device location that is in the respective zone. The inspection zone score for each of one or more of the plurality of zones of the building is displayed on a dashboard.

Another example may be found in a method for determining a device inspection score. The method includes retrieving inspection data, wherein the inspection data includes, for each of a plurality of devices of the building, a device type, a device location, and time stamps associated with an inspection of each of the plurality of devices. The method includes determining a device inspection score for each of the plurality of devices of the building, wherein the device inspection health score represents a degree at which the respective device was inspected relative to a predetermined inspection schedule. The device inspection score for one or more of the plurality of devices is displayed on a dashboard.

Another example may be found in a method for determining an operator efficiency of a plurality of operators in resolving alarms generated by devices in a building. The method includes retrieving device data, wherein the device data includes, for each of a plurality of devices of the building, a device type, a device location, alarms generated by the respective device, a time duration taken to resolve each alarm of the respective device, and an operator identifier that identifies a respective one of the plurality of operators that resolved each of the alarms of the device. The method includes determining an operator rank score for each of the plurality of operators, wherein each of the plurality of operator resolves a subset of the alarms generated by the plurality of devices of the building, and wherein the operator rank score for each operator represents a relative operator efficiency for acknowledging and/or resolving alarms generated by the plurality of devices of the building. The operator rank score for one or more of the plurality of operators is displayed on a dashboard.

The preceding summary is provided to facilitate an understanding of some of the innovative features unique to the present disclosure and is not intended to be a full description. A full appreciation of the disclosure can be gained by taking the entire specification, claims, figures, and abstract as a whole.

BRIEF DESCRIPTION OF THE FIGURES

The disclosure may be more completely understood in consideration of the following description of various examples in connection with the accompanying drawings, in which:

Figure 1 is a schematic block diagram of an illustrative building automation system;
Figures 2A and 2B are flow diagrams that together show an illustrative method for determining an inspection efficiency;
Figures 3A and 3B are flow diagrams that together show an illustrative method for determining an inspection efficiency;
Figure 4A and 4B determining an operator efficiency;
Figure 5 is a flow diagram showing an illustrative method for determining an inspection efficiency;
Figure 6 is a flow diagram showing an illustrative method for determining a device inspection score;
Figure 7 is a flow diagram showing an illustrative method for determining an operator efficiency;
Figure 8 is a schematic block diagram outlining an illustrative method;
Figure 9 is an illustrative dashboard that may be displayed.
Figures 10A and 10B are illustrative data displays of raw data before and after pre-processing, respectively;
Figures 11A and 11B are illustrative data displays of data showing equipment up for inspection and all equipment, respectively;
Figure 12 is an illustrative dashboard that may be displayed;
Figure 13 is an illustrative dashboard that may be displayed; and
Figure 14 is a flow diagram showing an illustrative method.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

DESCRIPTION

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic is described in connection with an embodiment, it is contemplated that the feature, structure, or characteristic may be applied to other embodiments whether or not explicitly described unless clearly stated to the contrary.

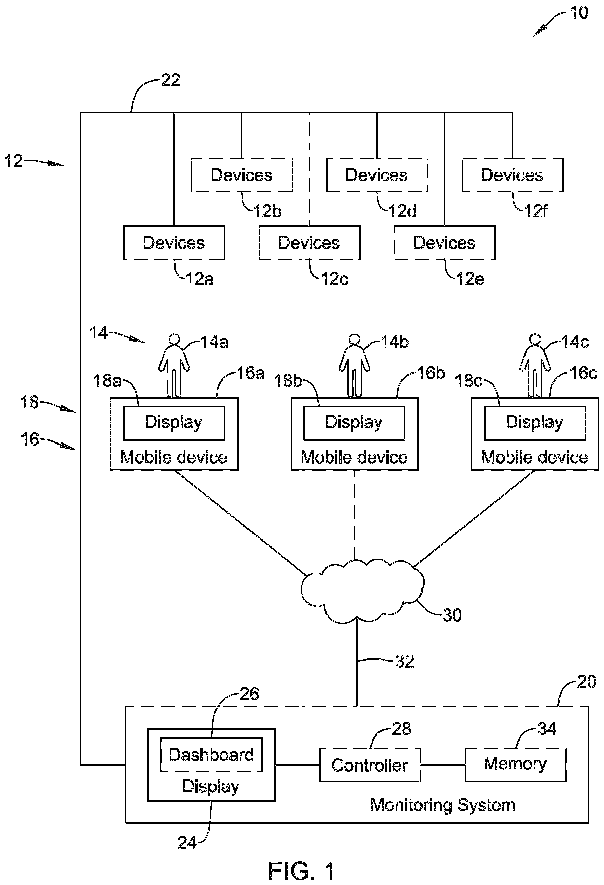

Figure 1 is a schematic block diagram showing an illustrative building automation system 10 that may be deployed within a building or other facility. The building automation system 10 may include a number of devices 12, individually labeled as 12a, 12b, 12c, 12d, 12e and 12f. While a total of six devices 12 are shown, this is merely illustrative, as the building automation system 10 may include any number of devices 12. In some instances, at least some of the devices 12 may represent components within an HVAC system. In some instances, at least some of the devices 12 may represent components within a security system or within an access control system. In some instances, at least some of the devices 12 may include motion detectors, security cameras, microphones, door release devices, smoke detectors, pull stations, temperature sensors, fire detectors, duct detectors, heat detectors and others. In some instances, at least some of the devices 12 may be sensors or other devices that monitor for a particular condition and can raise an alarm if the particular condition occurs, or if a monitored concentration exceeds a threshold value. These are just examples.

In some instances, at least some of the devices 12 may be devices that need to be periodically inspected. Inspectors 14, individually labeled as 14a, 14b and 14c, may be tasked with periodically inspecting each of the devices 12. While a total of three inspectors 14 are shown, this is merely illustrative, as any number of inspectors 14 may be tasked with periodically inspecting the devices 12. To facilitate inspection, each of the inspectors 14 utilize a mobile device 16, individually labeled as 16a, 16b and 16c. While each of the inspectors 14 are shown as having their own mobile device 16, in some cases it is contemplated that several inspectors 14 may share a mobile device 16, for example. Each of the mobile devices 16, which may for example be a smartphone, a tablet, a phablet or even a laptop computer, includes a display 18, individually labeled as 18a, 18b and 18c. Each of the displays 18 may be used for displaying information useful to the inspector 14 for carrying out their inspection of each of the devices 12 assigned to them, for example.

A monitoring station 20 may be used to receive alarms raised by one or more of the devices 12. In some instances, each of the devices 12 may be operably coupled with a network 22. The network 22 may be a wired network, for example, and may represent a single network or communication between two, three or more different networks. In some instances, the network 22 may be a wireless network communicating via any of a number of different wireless communication protocols. In some instances, the network 22 may represent a combination of a wired network and a wireless network, for example.

The monitoring station 20 may include a display 24 that may be used for displaying alarm information for alarms transmitted from one or more of the devices 12. The display 24 may be used for displaying a dashboard 26 that may provide a compilation of alarm and/or other data. The dashboard 26 may provide information relating to the efficiency of the inspectors 14, regarding how quickly they inspect the devices 12. The dashboard 26 may provide information relating to the efficiency of one or more operators that operate the monitoring station 20, such as how quickly the one or more operators recognize and respond to alarms from one or more of the devices 12. These are just examples. The monitoring station 20 includes a controller 28 that may be configured to process incoming alarms and/or other data. The controller 28 may be configured to process information received from the mobile devices 16. In some instances, the controller 28 may communicate with the mobile devices 16 via a wireless network 30. In some instances, the wireless network 30 may include additional components such as a cloud-based server 32, for example. In some instances, the wireless network 30 may be a cellular network, wifi network, mesh network or any other suitable network. Accordingly, the controller 28 may be configured to communicate with the devices 12 via the network 22 and to communicate with the wireless devices 16 with the wireless network 30. The monitoring station 20 may include a memory 34 that is operably coupled with the controller 28 for storing incoming information, for example.

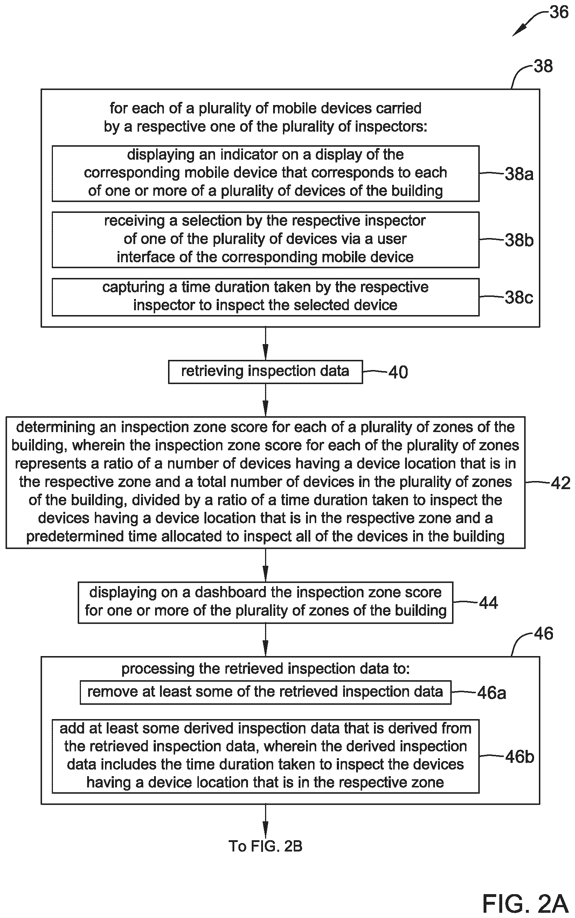

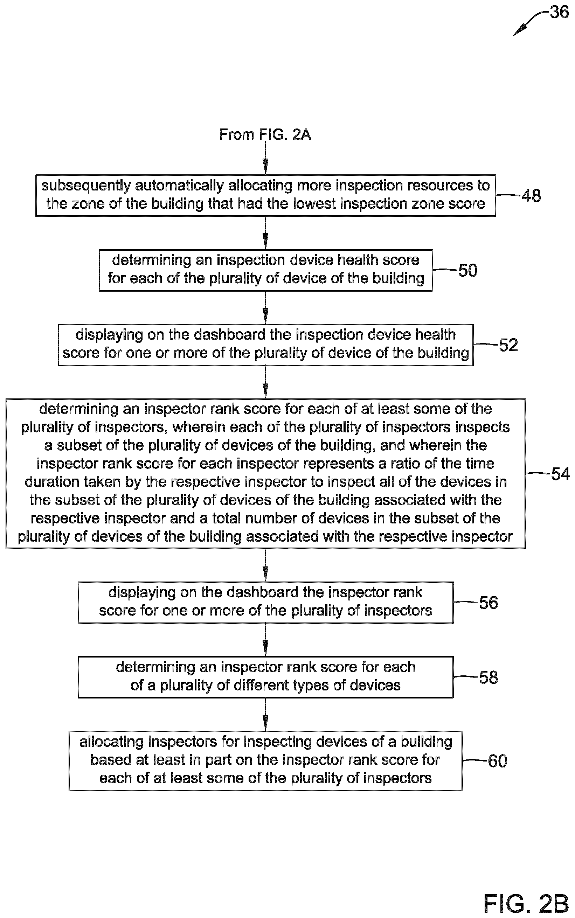

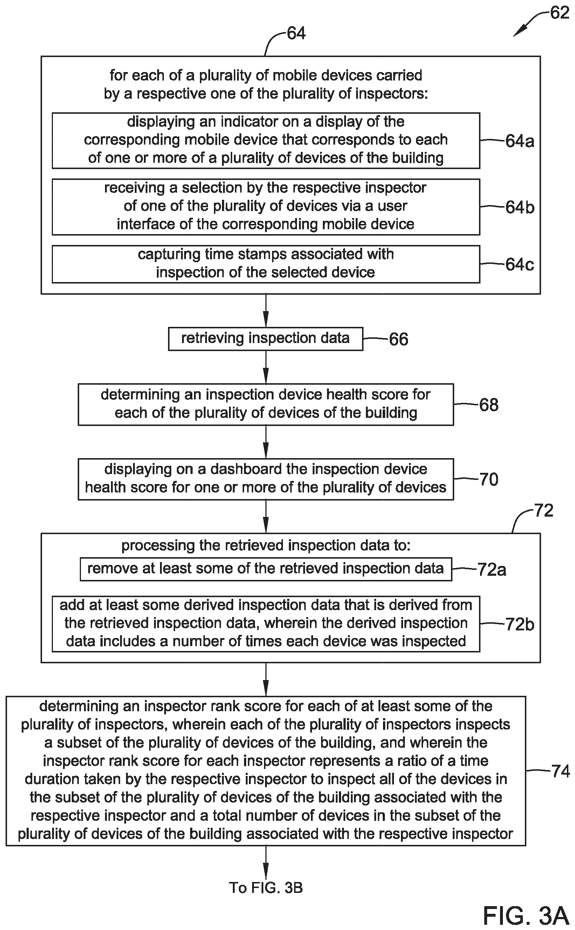

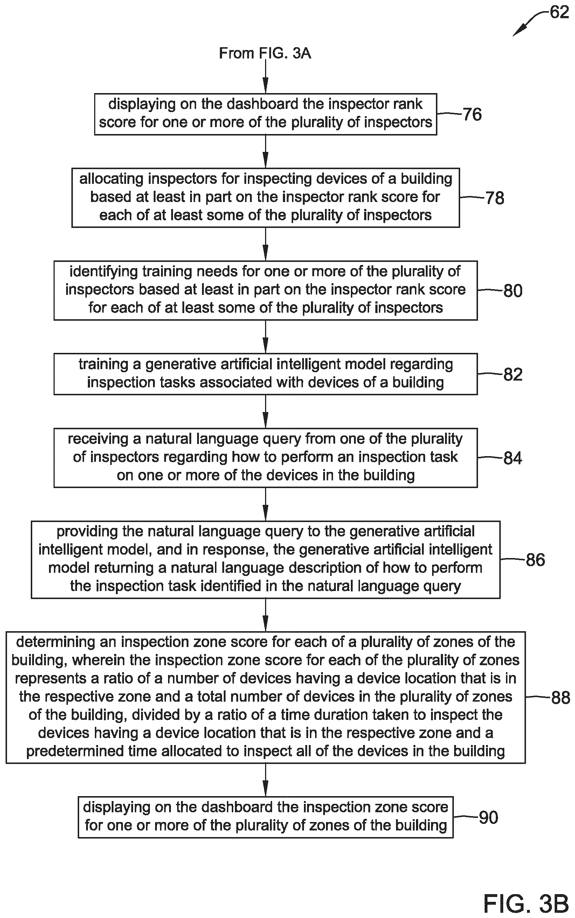

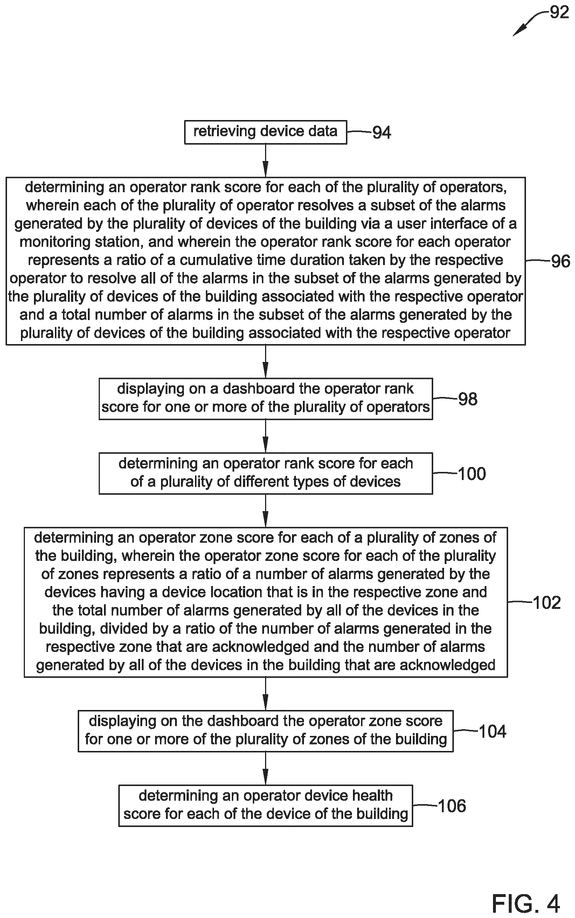

The building control system 10, including the controller 28, may be configured to carry out a number of methods relating to ascertaining the efficiency of the inspectors 14 as well as the efficiency of the one or more operators operating the monitoring station 20. Figures 2A and 2B are flow diagrams that together show an illustrative method that may be carried out via the building control system 10. Figures 3A and 3B are flow diagrams that together show an illustrative method that may be carried out via the building control system 10. Figures 4, 5, 6 and 7 are each flow diagrams showing illustrative methods that may be carried out via the building control system 10.

Figures 2A and 2B are flow diagrams that together show an illustrative method 36 for determining an inspection efficiency of a plurality of inspectors inspecting devices of a building control system. The method includes carrying out several steps for each of a plurality of mobile devices 16 carried by a respective one of the plurality of inspectors 14, as indicated at block 38. The steps include displaying an indicator on a display 18 of the corresponding mobile device 16 that corresponds to each of one or more of a plurality of devices 12 of the building, as indicated at block 38a. The steps include receiving a selection by the respective inspector 14 of one of the plurality of devices 12 via a user interface of the corresponding mobile device, as indicated at block 38b. The steps include capturing a time duration taken by the respective inspector 14 to inspect the selected device 12, as indicated at block 38c.

The method 36 includes retrieving inspection data, as indicated at block 40. The inspection data includes, for each of the plurality of devices 12 of the building, a device type. The inspection data includes, for each of the plurality of devices 12 of the building, a device location. The inspection data includes, for each of the plurality of devices 12 of the building, the time duration taken to inspect the respective device. In Figures 2A-2B, an inspection zone score is determined for each of a plurality of zones of the building, wherein the inspection zone score for each of the plurality of zones represents a ratio of a number of devices having a device location that is in the respective zone over a total number of devices in the plurality of zones of the building, divided by a ratio of a time duration taken to inspect the devices having a device location that is in the respective zone over a predetermined time allocated to inspect all of the devices in the building, as indicated at block 42. The inspection zone score for one or more of the plurality of zones of the building is displayed on a dashboard, as indicated at block 44.

In some instances, the method 36 may further include processing the retrieved inspection data, as indicated at block 46. The retrieved inspection data may be processed to remove at least some of the retrieved inspection data (e.g. outliers, incomplete entries, redundant entries, etc.), as indicated at block 46a. The retrieved inspection data may be processed to add at least some derived inspection data that is derived from the retrieved inspection data, wherein the derived inspection data includes, for example, the time duration taken to inspect the devices having a device location that is in the respective zone, as indicated at block 46b.

Continuing on Figure 2B, the method 36 may further include subsequently automatically allocating more inspection resources to the zone of the building that had the lowest inspection zone score, as indicated at block 48. In some instances, the method 36 may further include determining an inspection device health score for each of the plurality of devices of the building, as indicated at block 50. In some instances, the inspection device health score may include a device under inspection score, which represents a degree at which the respective device was under inspected relative to a predetermined inspection schedule. In some instances, the inspection device health score may include a device over inspection score, which represents a degree at which the respective device was over inspected relative to the predetermined inspection schedule. The inspection device health score for one or more of the plurality of devices of the building is displayed on the dashboard, as indicated at block 52.

In some instances, the method 36 may further include determining an inspector rank score for each of at least some of the plurality of inspectors, wherein each of the plurality of inspectors inspects a subset of the plurality of devices of the building, and wherein the inspector rank score for each inspector represents a ratio of the time duration taken by the respective inspector to inspect all of the devices in the subset of the plurality of devices of the building associated with the respective inspector over a total number of devices in the subset of the plurality of devices of the building associated with the respective inspector, as indicated at block 54. The inspector rank score for one or more of the plurality of inspectors may be displayed on the dashboard, as indicated at block 56. In some instances, the method 36 may further include determining an inspector rank score for each of a plurality of different types of devices, as indicated at block 58. In some instances, the method 36 may further include allocating inspectors for inspecting devices of a building based at least in part on the inspector rank score for each of at least some of the plurality of inspectors, as indicated at block 60.

Figures 3A and 3B are flow diagrams that together show an illustrative method 62 for determining an inspection efficiency of a plurality of inspectors inspecting devices of a building automation system. The method includes carrying out several steps for each of a plurality of mobile devices 16 carried by a respective one of the plurality of inspectors 14, as indicated at block 64. The steps include displaying an indicator on a display 18 of the corresponding mobile device 16 that corresponds to each of one or more of a plurality of devices 12 of the building, as indicated at block 64a. The steps include receiving a selection by the respective inspector 14 of one of the plurality of devices 12 via a user interface of the corresponding mobile device 16, as indicated at block 64b. The steps include capturing time stamps associated with inspection of the selected device, as indicated at block 64c.

The method 62 includes retrieving inspection data, as indicated at block 66. The inspection data includes, for each of the plurality of devices 12 of the building, a device type. The inspection data includes, for each of the plurality of devices of the building, a device location. The inspection data includes, for each of the plurality of devices 12 of the building, the time stamps associated with the inspection of each of the plurality of devices 12. An inspection device health score for each of the plurality of devices of the building is determined, as indicated at block 68. The inspection device health score may include a device under inspection score, which represents a degree at which the respective device 12 was under inspected relative to a predetermined inspection schedule. The inspection device health score may include a device over inspection score, which represents a degree at which the respective device 12 was over inspected relative to the predetermined inspection schedule. The inspection device health score for one or more of the plurality of devices 12 is displayed on a dashboard, as indicated at block 70.

In some instances, the method 62 may include processing the retrieved inspection data, as indicated at block 72. The retrieved inspection data may be processed to remove at least some of the retrieved inspection data (e.g. outliers, incomplete entries, redundant entries, etc.), as indicated at block 72a. The retrieved inspection data may be processed to add at least some derived inspection data that is derived from the retrieved inspection data, wherein the derived inspection data includes a number of times each device was inspected, as indicated at block 72b. In some instances, the method 62 may further include determining an inspector rank score for each of at least some of the plurality of inspectors, wherein each of the plurality of inspectors 14 inspects a subset of the plurality of devices 12 of the building, and wherein the inspector rank score for each inspector 14 represents a ratio of a time duration taken by the respective inspector 14 to inspect all of the devices in the subset of the plurality of devices 12 of the building associated with the respective inspector 14 over a total number of devices 12 in the subset of the plurality of devices of the building associated with the respective inspector 14, as indicated at block 74.

Continuing on Figure 3B, in some instances the method 62 may further include displaying on the dashboard the inspector rank score for one or more of the plurality of inspectors 14, as indicated at block 76. The method 62 may further include allocating inspectors for inspecting devices of a building based at least in part on the inspector rank score for each of at least some of the plurality of inspectors 14, as indicated at block 78. The method 62 may further include identifying training needs for one or more of the plurality of inspectors 14 based at least in part on the inspector rank score for each of at least some of the plurality of inspectors, as indicated at block 80.

In some instances, the method 62 may further include training a generative artificial intelligence model regarding inspection tasks associated with devices of the building automation system, as indicated at block 82. The generative artificial intelligence model may include ChatGPT, for example, or Sally 2.0. Other generative artificial intelligence models are also contemplated. Training the generative artificial intelligence model regarding inspection tasks associated with particular devices 12 of a building automation system may include uploading training manuals, user manuals, specification sheets, standard operation procedures for inspecting and/or maintaining the devices, operational models and/or other information associated with the devices 12, for example. The generative artificial intelligence model then be trained using the uploaded information to achieve a trained domain specific generative artificial intelligence model. The method 62 may further include receiving a natural language query from one of the plurality of inspectors regarding how to perform an inspection and/or maintenance task on one or more of the devices 12 in the building, as indicated at block 84. The method 62 may further include providing the natural language query to the trained domain specific generative artificial intelligent model, and in response, the trained domain specific generative artificial intelligent model returning a natural language description of how to perform the inspection and/or maintenance task identified in the natural language query, as indicated at block 86.

In some instances, the method 62 may further include determining an inspection zone score for each of a plurality of zones of the building, wherein the inspection zone score for each of the plurality of zones represents a ratio of a number of devices having a device location that is in the respective zone over a total number of devices in the plurality of zones of the building, divided by a ratio of a time duration taken to inspect the devices having a device location that is in the respective zone over a predetermined time allocated to inspect all of the devices in the building, as indicated at block 88. The inspection zone score for one or more of the plurality of zones of the building may be displayed on the dashboard, as indicated at block 90.

Figure 4 is a flow diagram showing an illustrative method 92 for determining an operator efficiency of a plurality of operators in resolving alarms generated by devices 12 in a building automation system. The method 92 includes retrieving device data, as indicated at block 94. The device data includes, for each of a plurality of devices 12 of the building automation system, a device type. The device data includes, for each of a plurality of devices of the building automation system, a device location. The device data includes, for each of a plurality of devices of the building automation system, alarms generated by the respective device. The device data includes, for each of a plurality of devices of the building automation system, a time duration taken to resolve each alarm of the respective device. The device data includes, for each of a plurality of devices of the building automation system, an operator identifier that identifies a respective one of the plurality of operators that resolved each of the alarms of the device.

The method 92 includes determining an operator rank score for each of the plurality of operators, wherein each of the plurality of operators resolve a subset of the alarms generated by the plurality of devices of the building automation system via a user interface of a monitoring station, and wherein the operator rank score for each operator represents a ratio of a cumulative time duration taken by the respective operator to resolve all of the alarms in the subset of the alarms generated by the plurality of devices of the building associated with the respective operator over a total number of alarms in the subset of the alarms generated by the plurality of devices of the building automation system associated with the respective operator, as indicated at block 96. The operator rank score for one or more of the plurality of operators is displayed on a dashboard, as indicated at block 98.

In some instances, the method 92 may further include determining an operator rank score for each of a plurality of different types of devices, as indicated at block 100. The method 92 may further include determining an operator zone score for each of a plurality of zones of the building, wherein the operator zone score for each of the plurality of zones represents a ratio of a number of alarms generated by the devices having a device location that is in the respective zone over the total number of alarms generated by all of the devices in the building, divided by a ratio of the number of alarms generated in the respective zone that are acknowledged over the number of alarms generated by all of the devices in the building that are acknowledged, as indicated at block 102. The method 92 may further include displaying on the dashboard the operator zone score for one or more of the plurality of zones of the building, as indicated at block 104.

In some instances, the method 92 may further include determining an operator device health score for each of the devices 12 of the building automation system, as indicated at block 106. The operator device health score may include an average alarm resolution time, which represents an average time duration taken to resolve the alarms generated by the respective device. The operator device health score may include an alarm acknowledgement rate, which represents a ratio of a total number of alarms generated by the respective device that are resolved over the total number of alarms generated by the respective device.

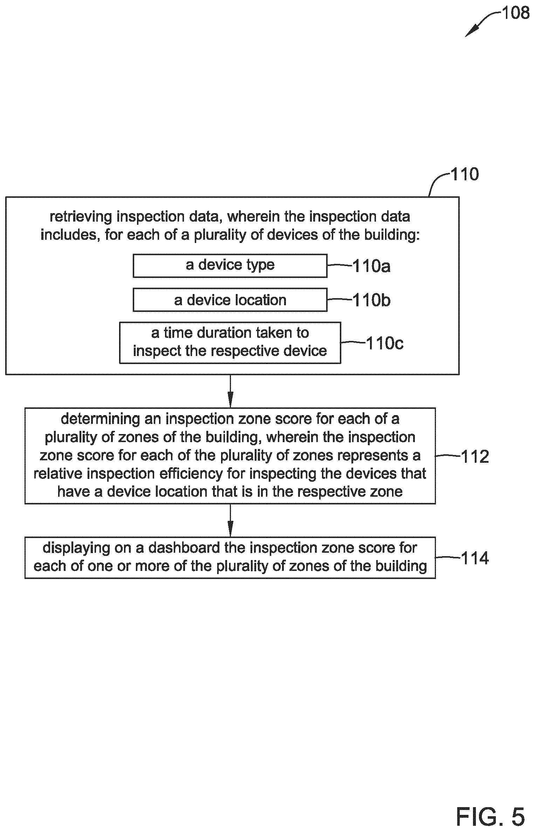

Figure 5 is a flow diagram showing an illustrative method 108 for determining an inspection efficiency of a plurality of inspectors inspecting devices of a building automation system. The method 108 includes retrieving inspection data, as indicated at block 110. The inspection data includes, for each of a plurality of devices of the building automation system, a device type, as indicated at block 11 0a. The inspection data includes, for each of a plurality of devices of the building automation system, a device location, as indicated at block 11 0b. The inspection data includes, for each of a plurality of devices of the building automation system, a time duration taken to inspect the respective device, as indicated at block 110c. An inspection zone score is determined for each of a plurality of zones of the building, wherein the inspection zone score for each of the plurality of zones represents a relative inspection efficiency for inspecting the devices that have a device location that is in the respective zone, as indicated at block 112. The inspection zone score for each of one or more of the plurality of zones of the building is displayed on a dashboard, as indicated at block 114.

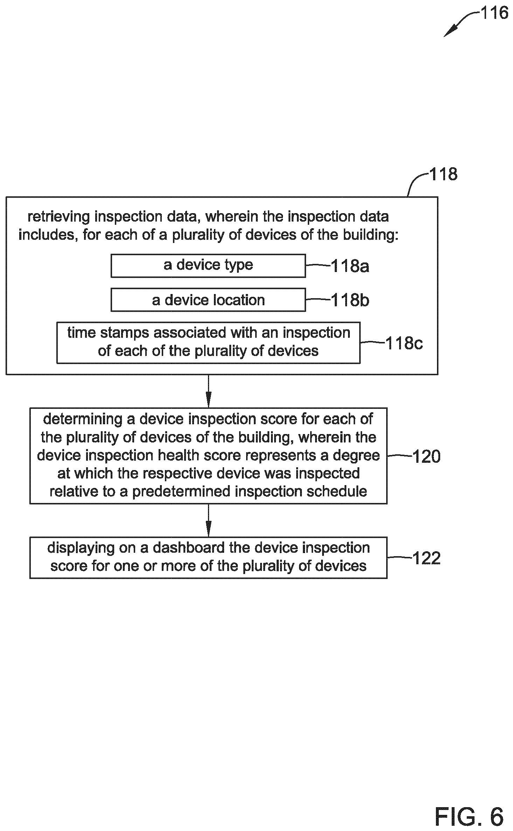

Figure 6 is a flow diagram showing an illustrative method 116 for determining a device inspection score. The method 116 includes retrieving inspection data, as indicated at block 118. The inspection data includes, for each of a plurality of devices of the building automation system, a device type, as indicated at block 118a. The inspection data includes, for each of a plurality of devices of the building automation system, a device location, as indicated at block 118b. The inspection data includes, for each of a plurality of devices of the building automation system, time stamps associated with an inspection of each of the plurality of devices, as indicated at block 118c. A device inspection score is determined for each of the plurality of devices of the building, wherein the device inspection health score represents a degree at which the respective device was inspected relative to a predetermined inspection schedule, as indicated at block 120. The device inspection score for one or more of the plurality of devices is displayed on a dashboard, as indicated at block 122.

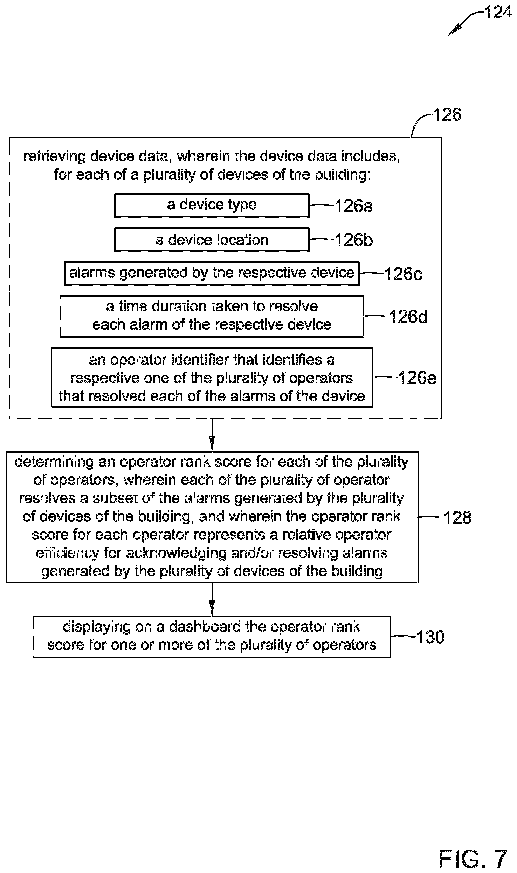

Figure 7 is a flow diagram showing an illustrative method 124 for determining an operator efficiency of a plurality of operators in resolving alarms generated by devices in a building automation system. The method 124 includes retrieving device data, as indicated at block 126. The device data includes, for each of a plurality of devices of the building automation system, a device type, as indicated at block 126a. The device data includes, for each of a plurality of devices of the building automation system, a device location, as indicated at block 126b. The device data includes, for each of a plurality of devices of the building automation system, alarms generated by the respective device, as indicated at block 126c. The device data includes, for each of a plurality of devices of the building automation system, a time duration taken to resolve each alarm of the respective device, as indicated at block 126d. The device data includes, for each of a plurality of devices of the building automation system, an operator identifier that identifies a respective one of the plurality of operators that resolved each of the alarms of the device, as indicated at block 126e. The method 124 includes determining an operator rank score for each of the plurality of operators, wherein each of the plurality of operator resolves a subset of the alarms generated by the plurality of devices of the building automation system, and wherein the operator rank score for each operator represents a relative operator efficiency for acknowledging and/or resolving alarms generated by the plurality of devices of the building automation system, as indicated at block 128. The operator rank score for one or more of the plurality of operators is displayed on a dashboard, as indicated at block 130.

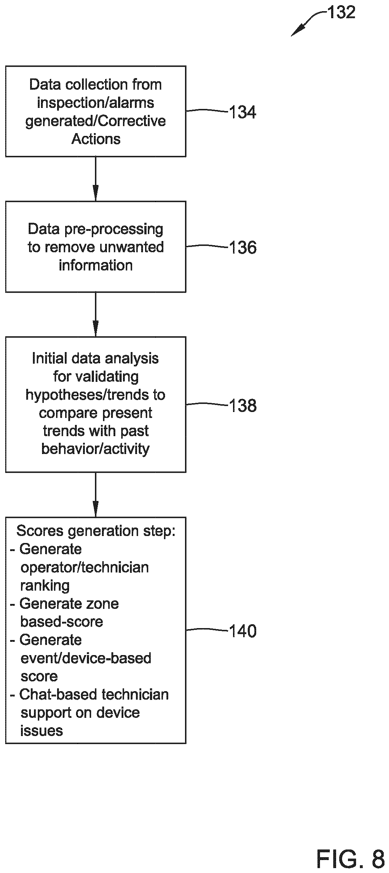

Figure 8 is a schematic block diagram outlining an illustrative method 132 for determining the efficiency of inspectors that are assigned a number of devices to periodically inspect as well as the efficiency of the operators that are assigned to monitor the devices for alarms generated by those devices. The method 132 includes data collection, as indicated at block 134. This may include the building automation system 10 collecting data from inspections performed by the inspectors, including number of inspections performed and whether some devices were over-inspected or under-inspected, for example. Data collection may also include information on alarms that were generated, as well as what actions were taken and how quickly those actions were taken in response to the generated alarms by operators. The method 132 includes data pre-processing, as indicated at block 136. Data pre-processing may include processing the data to remove unwanted data (e.g. outliers, incomplete entries, redundant entries, etc.). The method 132 includes initial data analysis, as indicated at block 138. Initial data analysis may include validating hypotheses or trends to compare current trends with past behavior and/or activity. The method 132 includes generating scores, as indicated at block 140. This may include generating operator and inspector ratings. This may include generating zone-based scores. This may include generating event-based scores or device-based scores. In some instances, the method 132 also includes or provides chat-based assistance for technical support.

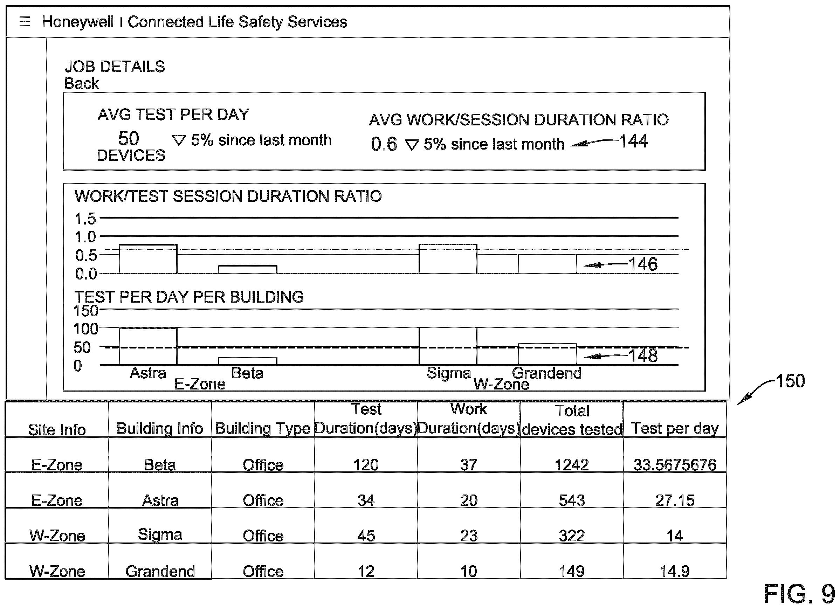

Figure 9 is an illustrative dashboard 142 that may be displayed by the system 10, such as on the display 24 of the monitoring station 20. The dashboard 142 displays metrics such as tests per day per building, average tests per day for a particular date range, and details about each zone of the building. The "tests" here correspond to an inspection by one of the inspectors 14. In particular, the dashboard 142 includes a summary section 144 that displays, as shown, an average tests (e.g. inspections) per day of 50 devices, which represents a five percent decrease relative to the previous month, and an average work/session duration of 0.6, which also represents a five percent decrease relative to the previous month. A section 146 provides work/test session ratio details for several different facilities. A section 148 provides tests (e.g. inspections) per day per building details for the same several different facilities. The dashboard 142 includes a table section 150 that includes test (e.g. inspection) duration, work duration, total devices tested (e.g. inspected) and number of devices tested (e.g. inspected) per day for a number of different facilities in both an East zone and a West zone.

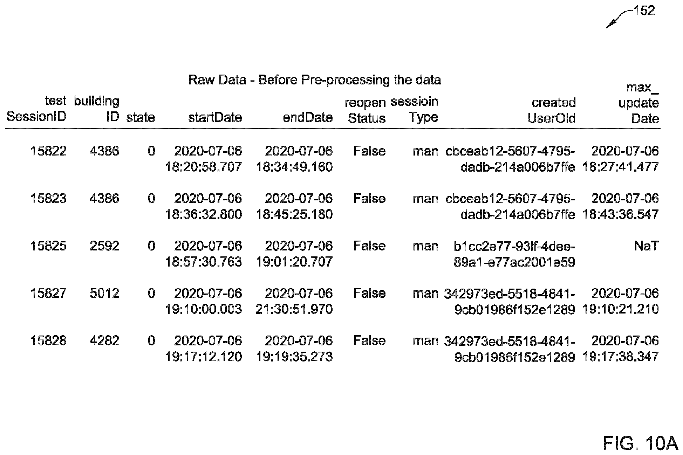

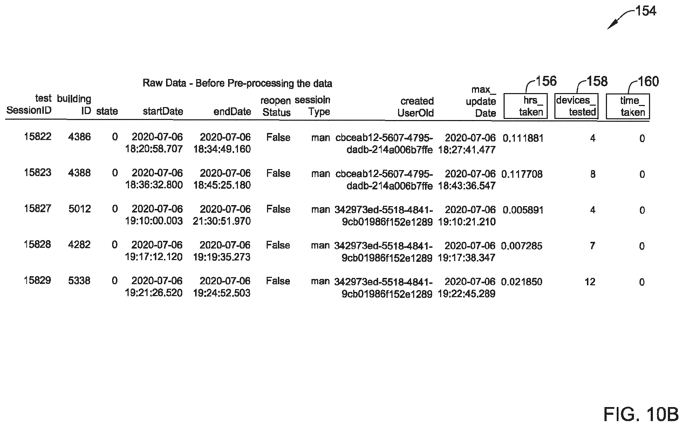

Figure 10A provides a dashboard 152 that shows an example of raw data, before any pre-processing while Figure 10B provides a dashboard 154 that shows the same data after pre-processing. In some instances, as shown, the dashboard 154 includes several columns including Hours Taken 156, Devices Tested 158 and Time Taken 160 that are derived from the raw data. Hours Taken represents the total hours spent on building inspection. Devices Tested represents the total number of devices that were tested (e.g. inspected). Time Taken represents the number of days spent, where in this example Time Taken is set equal to zero if less than 1 full day.

It will be appreciated that these scores may be presented in a graphical manner. For example, these scores may be presented in a bar graph, or any other type of graph. Zone based scores may be provided in a bar graph to easily provide comparisons between different zones or buildings in order to identify zones or buildings that are outliers. Some buildings or zones may not have enough technicians or operators, for example, as indicated by poor scores for particular buildings or zones. Conversely, some buildings or zones may be overstaffed as indicated by their scores.

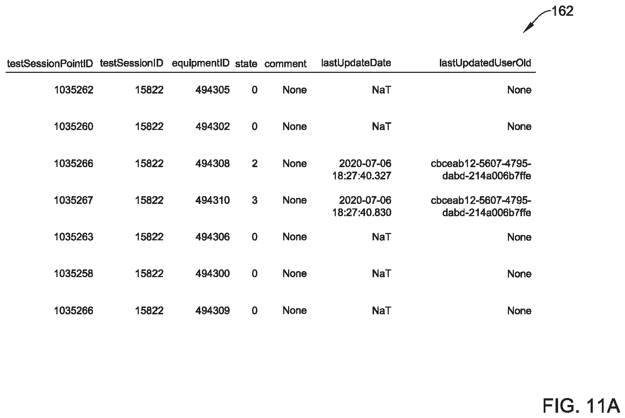

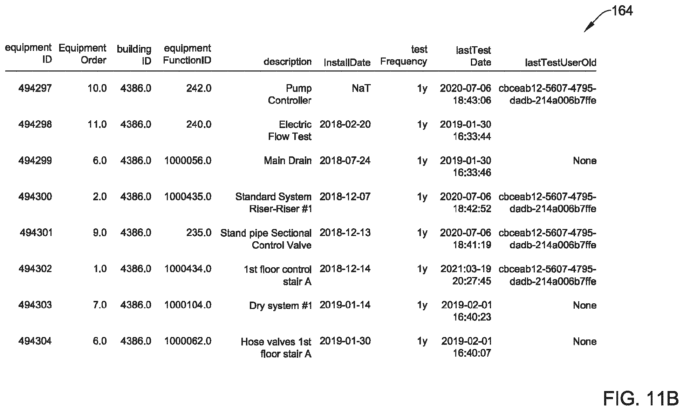

Figure 11A provides a dashboard 162 that shows an example of data pertaining to all of the equipment in a building that is up for inspection while Figure 11B provides a dashboard 164 that shows an example of data pertaining to all of the equipment in the building, which or course includes equipment currently up for inspection as well as equipment that is not currently up for inspection.

The building automation system 10 may generate a number of metrics that may be used for data-driven decision making in improving inspection, maintenance and/or operator efficiency of a building automation system. These metrics include:

**Zone Score** - a score for each zone to indicate urgency and time taken to resolve alarm issues and/or to inspect devices in the zone. The Zone Score may be device-specific for inspectors and alarm-specific for operators.

For inspectors, and in one example, the zone score may be determined by:

$$\textbf{Zone Score} = \text{Device Specific Score/Days Specific Score}$$

where,

$$\text{Device Specific Score} = \text{number of devices in specific zone/total number of devices in the building; and}$$

$$\text{Days specific score} = \text{days worked in that specific zone/days allocated for the complete inspection at the building.}$$

For operators, and in one example, the zone score may be determined by:

$$\text{Zone Score} = \text{Alarm Specific Score/Acknowledgement Specific Score}$$

where,

$$\text{Alarm Specific Score} = \text{number of alarms in specific zone/total number of alarms in the building; and}$$

$$\text{Days Specific Score} = \text{acknowledged alarms in specific zone/acknowledged alarms in total.}$$

**Device Health Score** - An overall health score for each device or alarm based on device inspection time and/or number and severity of alarms. In one example, the device health score may be determined by:

$$\text{Device Health Score} = (\text{Overall Device Score} + \text{Overall Alarm Score})/2$$

where,

$$\text{Overall Device Score} = (\text{device under-inspected score} + \text{device over-inspected score})/2$$

$$\text{Overall Alarm Score} = (\text{device resolution time} + \text{device acknowledgement rate})/2.$$

**Inspector/Operator Score** - A rank for each inspector and/or operator based on their past performance. In one example, the Inspector/Operator Score may be determined by:

For inspectors, and in one example, the inspector score may be determined by:

$$\text{Inspector score} = \text{sum of response time for all alarms/number of devices inspected.}$$

For operators, and in one example, the operator score may be determined by:

$$\text{Operator score} = \text{sum of response time for all alarms/number of alarms acknowledged by the operator.}$$

In some instances, a zone-based score helps identify and prioritize which locations or zones in a facility need further attention/resources. As an example, the zone score may range from zero to one, with a higher number (closer to one) indicating better zone efficiency. This score may be used to identify inefficient zones/anomalies across one or more buildings and arrive at an overall building health score based on the zone-based score of each of the zones in the building. In some cases, the zone score may be used to estimate the costs associated with pricing/bidding a building for device testing and/or alarm management, including expected resources and time required. The zone score may be used to compare trends across similar zones, in similar building types, for benchmarking purposes. This zone score may be used to allocate inspectors and/or operators as per their skills and knowledge, for various zones of a building.

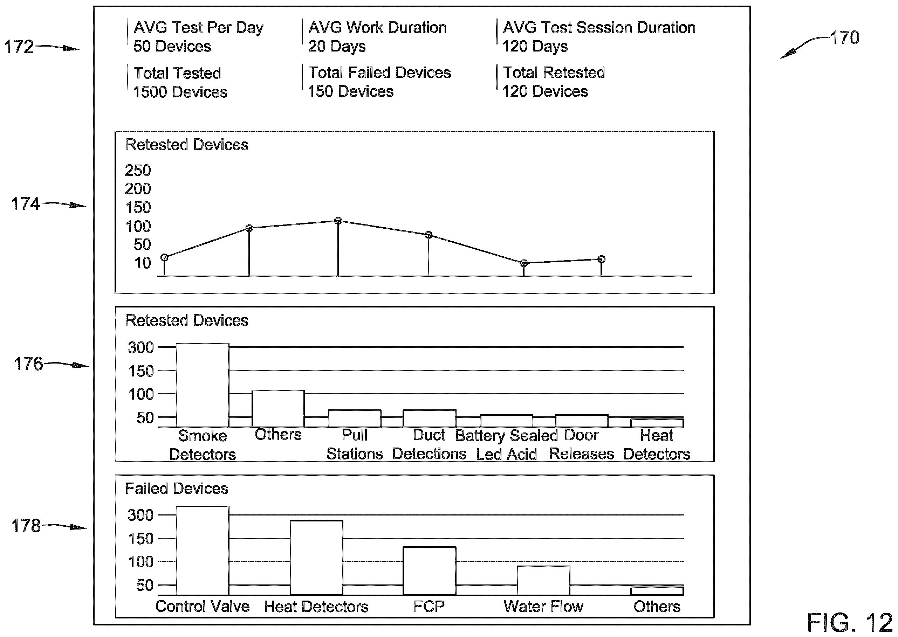

Figure 12 is an illustrative dashboard 170 that may be displayed. The dashboard 170 provides example data for a particular zone. The dashboard 170 highlights the tests (e.g. inspections) per day, retested devices and failed devices, which is all useful information. The dashboard 170 includes a summary section 172 that provides summary of average tests (e.g. inspections) per day, average work duration, average test (e.g. inspection) session duration, total devices tested (e.g. inspected), total devices failed and total devices retested (e.g. re-inspected). The dashboard 170 includes a daily tests (e.g. inspections) per day section 174 providing a graphical representation of how many devices were tested (e.g. inspected) per day. The dashboard 170 includes a retested section 176 providing a graphical representation of how many of each type of device were retested (e.g. re-inspected). The dashboard 170 includes a failed devices section 178 that provides a graphical representation of how many of each type of device failed its inspection.

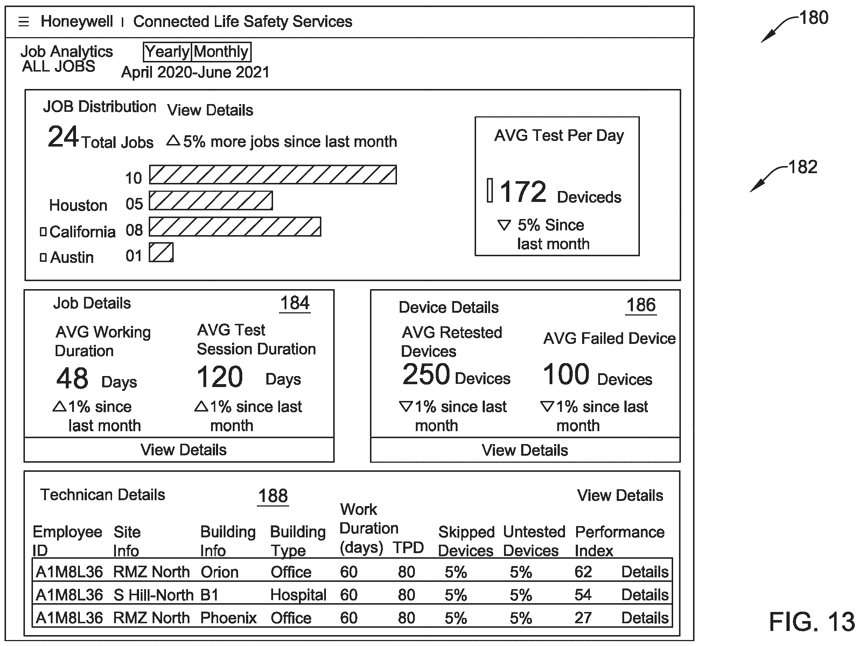

Figure 13 is an illustrative dashboard 180 that may be displayed. The dashboard 180 provides example data for all inspectors. The dashboard 180 includes a job distribution section 182 that breaks out the number of jobs per facility, as well as the average number of tests (e.g. inspections) per day. The dashboard 180 includes a job details section 184 and a device details section 186. A technician (e.g. inspector) details section 188 provides statistics for each of the inspectors. While only three inspectors are shown, it will be appreciated that the dashboard 180 may be configured to allow a user to scroll through a larger list of inspectors in order to view the statistics for any particular inspector.

For operators, an operator's rank may be computed based on average response time to alarms/devices across alarm/device types and number of alarms attended to, out of the initial allocated alarms/devices. The lesser the average response time, the better the rank of the operator. The following table provides an example:

| Operator ID | Sum of response time across devices (in seconds) | Number of devices acknowledged | Average response time (in seconds) | Rank |
|---|---|---|---|---|
| CCS1 | 1576 | 121 | 13.02 | 4 |
| CCS2 | 894 | 76 | 11.76 | 1 |
| CCS2 | 1789 | 143 | 12.51 | 2 |
| CCS3 | 2104 | 165 | 12.76 | 3 |
| CCS4 | 1256 | 85 | 14.77 | 5 |

A device health score can help to identify devices that need immediate attention (e.g. inspection, maintenance, repair or replacement). The device health score may range from zero to one, with a higher device health score indicating a better relative health and a lower device health score indicating a relatively poorer device health. The following table provides an example:

| Device ID | Under-Inspected Score (a) | Over-inspected score (b) | Overall device score X=(a+b)/2 | Acknowledgement Rate (d) | Resolution Time (e) | Overall Alarm Score Y=(d+2)/2 | Device Health Score (X+Y)/2 |
|---|---|---|---|---|---|---|---|
| A | 0.11 | 0.90 | 0.505 | 0.23 | 0.34 | 0.285 | 0.395 |
| B | 0.17 | 0.85 | 0.51 | 0.78 | 0.57 | 0.675 | 0.5925 |
| C | 0.74 | 0.23 | 0.485 | 0.92 | 0.68 | 0.80 | 0.6425 |
| D | 0.92 | 0.14 | 0.53 | 0.19 | 0.46 | 0.325 | 0.4275 |
| E | 0.78 | 0.25 | 0.515 | 0.45 | 0.91 | 0.68 | 0.5975 |

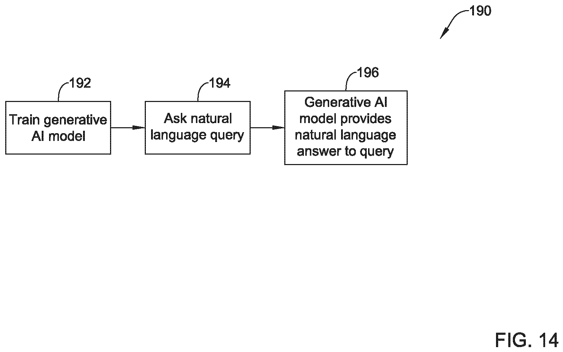

Figure 14 is a flow diagram showing an illustrative method 190 for using a generative AI (Artificial Intelligence) model for assisting inspectors in performing their duties. CHATGPT® is an example of a generative AI model. Dolly2.0 is another example of a generative AI model. The method 190 is not limited to any particular generative AI model. A generative AI model is trained, as indicated at block 192. In some instances, a generative AI model may be trained for better answering questions in a particular field or technology (i.e. domain) by uploading information regarding that particular field or technology to the generative AI model. In some cases, this may be done publicly, meaning that anyone can ask questions in that particular field or technology. In some cases, the training may be kept private, meaning that the training materials are not available to the general public. As an example, the generative AI model may be trained with information regarding the particular devices in the building automation system 10, such that the generative AI model will then be able to answer queries regarding the system 10.

Training the generative artificial intelligence model regarding inspection tasks associated with particular devices of the building automation system 10 may include uploading training manuals, user manuals, specification sheets, standard operation procedures for inspecting and/or maintaining the devices, operational models and/or other information associated with the devices 12, for example. The generative artificial intelligence model then be trained using the uploaded information to achieve a trained domain specific generative artificial intelligence model. The method 62 may include receiving a natural language query from one of the plurality of inspectors regarding how to perform an inspection and/or maintenance task on one or more of the devices 12 in the building, as indicated at block 194. The method 62 may further include providing the natural language query to the trained domain specific generative artificial intelligent model, and in response, the trained domain specific generative artificial intelligent model returning a natural language description of how to perform the inspection and/or maintenance task identified in the natural language query, as indicated at block 196.

A person is able to pose natural language queries to the generative AI model, as indicated at block 194. This may include questions like "how do I replace a smoke detector model xyz?", or perhaps "how do I fix a drained battery in device X?". In response, the trained domain specific generative AI model processes the natural language query, examines itself for suitable answers, and provides a natural language answer to the query, as indicated at block 196. As an example, a user may ask "Can you guide me to install an ABC model 122 fire alarm device?" In response, the trained domain specific generative AI model may provide step by step instructions for installing an ABC model 112 fire alarm device. This information may be available to the generative AI model because part of the training of the generative AI model may have included uploading the installation instructions for installing the ABC model 112 fire alarm device. As another example, the user may ask "How to troubleshoot wiring and networking issues while installing and programming the ABC model 112 fire alarm device?" In response, the trained domain specific generative AI model may provide a list of things for the user to be on the lookout for, or to specifically check, while installing and programming the ABC model 112 fire alarm device. It will be appreciated that a myriad of different questions regarding installation and programming of the ABC model 112 fire alarm device may be posed to, and answered by the trained domain specific generative AI model.

As another example, a user may pose the query "horn strobe did not sound or strobe during test, what are the recommended steps here?". In response, the trained domain specific generative AI model may output:

Detailed investigation must be made at the panel or box
Verify that the correct plug are installed
Verify that there is no kink in the cable
Verify the circuit is properly wired
Verify the metal ring or strip is installed correctly
Verify the box is plugged into the circuit
Verify that the correct screw is inserted into the box
Verify that the correct load and volume is plugged into the box
Verify the box is not overloading the circuit
Verify the circuit is operating normally

This is just an example.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

**Claims**

1. A method for determining an inspection efficiency of a plurality of inspectors inspecting devices of a building, the method comprising:

for each of a plurality of mobile devices carried by a respective one of the plurality of inspectors:

displaying an indicator on a display of the corresponding mobile device that corresponds to each of one or more of a plurality of devices of the building;
receiving a selection by the respective inspector of one of the plurality of devices via a user interface of the corresponding mobile device;
capturing a time duration taken by the respective inspector to inspect the selected device;

retrieving inspection data, wherein the inspection data includes, for each of the plurality of devices of the building:

a device type;
a device location;
the time duration taken to inspect the respective device;

determining an inspection zone score for each of a plurality of zones of the building, wherein the inspection zone score for each of the plurality of zones represents a ratio of a number of devices having a device location that is in the respective zone over a total number of devices in the plurality of zones of the building, divided by a ratio of a time duration taken to inspect the devices having a device location that is in the respective zone over a predetermined time allocated to inspect all of the devices in the building; and
display on a dashboard the inspection zone score for one or more of the plurality of zones of the building.

2. The method of claim 1, further comprising:
processing the retrieved inspection data to:

remove at least some of the retrieved inspection data; and
add at least some derived inspection data that is derived from the retrieved inspection data, wherein the derived inspection data includes the time duration taken to inspect the devices having a device location that is in the respective zone.

3. The method of claim 1, further comprising:
subsequently automatically allocating more inspection resources to the zone of the building that had the lowest inspection zone score.

4. The method of claim 1, further comprising:

determining an inspection device health score for each of the plurality of devices of the building, wherein the inspection device health score includes one or more of:

a device under inspection score, which represents a degree at which the respective device was under inspected relative to a predetermined inspection schedule;
a device over inspection score, which represents a degree at which the respective device was over inspected relative to the predetermined inspection schedule; and

displaying on the dashboard the inspection device health score for one or more of the plurality of devices of the building.

5. The method of claim 4, further comprising:

determining an inspector rank score for each of at least some of the plurality of inspectors, wherein each of the plurality of inspectors inspects a subset of the plurality of devices of the building, and wherein the inspector rank score for each inspector represents a ratio of the time duration taken by the respective inspector to inspect all of the devices in the subset of the plurality of devices of the building associated with the respective inspector over a total number of devices in the subset of the plurality of devices of the building associated with the respective inspector; and
displaying on the dashboard the inspector rank score for one or more of the plurality of inspectors.

6. The method of claim 1, further comprising:

determining an inspector rank score for each of at least some of the plurality of inspectors, wherein each of the plurality of inspectors inspects a subset of the plurality of devices of the building, and wherein the inspector rank score for each inspector represents a ratio of the time duration taken by the respective inspector to inspect all of the devices in the subset of the plurality of devices of the building associated with the respective inspector over a total number of devices in the subset of the plurality of devices of the building associated with the respective inspector; and
displaying on the dashboard the inspector rank score for one or more of the plurality of inspectors.

7.  The method of claim 6, further comprising determining an inspector rank score for each of a plurality of different types of devices.

8.  The method of claim 6, further comprising allocating inspectors for inspecting devices of a building based at least in part on the inspector rank score for each of at least some of the plurality of inspectors.

9.  The method of claim 1, further comprising:

    training a generative artificial intelligent model regarding inspection tasks associated with devices of the building;
    receiving a natural language query from one of the plurality of inspectors regarding how to perform an inspection task on one or more of the devices in the building; and
    providing the natural language query to the generative artificial intelligent model, and in response, the generative artificial intelligent model returning a natural language description of how to perform the inspection task identified in the natural language query.

10. A method for determining an operator efficiency of a plurality of operators in resolving alarms generated by devices in a building, the method comprising:

    retrieving device data, wherein the device data includes, for each of a plurality of devices of the building:

        a device type;
        a device location;
        alarms generated by the respective device;
        a time duration taken to resolve each alarm of the respective device;
        an operator identifier that identifies a respective one of the plurality of operators that resolved each of the alarms of the device;

    determining an operator rank score for each of the plurality of operators, wherein each of the plurality of operators resolve a subset of the alarms generated by the plurality of devices of the building via a user interface of a monitoring station, and wherein the operator rank score for each operator represents a ratio of a cumulative time duration taken by the respective operator to resolve all of the alarms in the subset of the alarms generated by the plurality of devices of the building associated with the respective operator over a total number of alarms in the subset of the alarms generated by the plurality of devices of the building associated with the respective operator; and
    display on a dashboard the operator rank score for one or more of the plurality of operators.

11. The method of claim 10, further comprising determining an operator rank score for each of a plurality of different types of devices.

12. The method of claim 10, further comprising:
    determining an operator zone score for each of a plurality of zones of the building, wherein the operator zone score for each of the plurality of zones represents a ratio of a number of alarms generated by the devices having a device location that is in the respective zone over the total number of alarms generated by all of the devices in the building, divided by a ratio of the number of alarms generated in the respective zone that are acknowledged over the number of alarms generated by all of the devices in the building that are acknowledged.

13. The method of claim 12, further comprising displaying on the dashboard the operator zone score for one or more of the plurality of zones of the building.

14. The method of claim 13, further comprising:
    determining an operator device health score for each of the device of the building, wherein the operator device health score includes one or more of:
    an average alarm resolution time, which represents an average time duration taken
    to resolve the alarms generated by the respective device; and an alarm acknowledgement rate, which represents a ratio of a total number of
    alarms generated by the respective device that are resolved over the total number of alarms generated by the respective device.

FIG. 1

36

38

for each of a plurality of mobile devices carried
by a respective one of the plurality of inspectors:

displaying an indicator on a display of the
corresponding mobile device that corresponds to each
of one or more of a plurality of devices of the building
— 38a

receiving a selection by the respective inspector
of one of the plurality of devices via a user
interface of the corresponding mobile device
— 38b

capturing a time duration taken by the respective
inspector to inspect the selected device
— 38c

retrieving inspection data — 40

determining an inspection zone score for each of a plurality of zones of the
building, wherein the inspection zone score for each of the plurality of zones
represents a ratio of a number of devices having a device location that is in
the respective zone and a total number of devices in the plurality of zones
of the building, divided by a ratio of a time duration taken to inspect the
devices having a device location that is in the respective zone and a
predetermined time allocated to inspect all of the devices in the building
— 42

displaying on a dashboard the inspection zone score
for one or more of the plurality of zones of the building
— 44

46

processing the retrieved inspection data to:

remove at least some of the retrieved inspection data — 46a

add at least some derived inspection data that is derived from
the retrieved inspection data, wherein the derived inspection
data includes the time duration taken to inspect the devices
having a device location that is in the respective zone
— 46b

To FIG. 2B

FIG. 2A

36

From FIG. 2A

subsequently automatically allocating more inspection resources to the zone of the building that had the lowest inspection zone score —48

determining an inspection device health score for each of the plurality of device of the building —50

displaying on the dashboard the inspection device health score for one or more of the plurality of device of the building —52

determining an inspector rank score for each of at least some of the plurality of inspectors, wherein each of the plurality of inspectors inspects a subset of the plurality of devices of the building, and wherein the inspector rank score for each inspector represents a ratio of the time duration taken by the respective inspector to inspect all of the devices in the subset of the plurality of devices of the building associated with the respective inspector and a total number of devices in the subset of the plurality of devices of the building associated with the respective inspector —54

displaying on the dashboard the inspector rank score for one or more of the plurality of inspectors —56

determining an inspector rank score for each of a plurality of different types of devices —58

allocating inspectors for inspecting devices of a building based at least in part on the inspector rank score for each of at least some of the plurality of inspectors —60

FIG. 2B

for each of a plurality of mobile devices carried
by a respective one of the plurality of inspectors: — 64

displaying an indicator on a display of the
corresponding mobile device that corresponds to each
of one or more of a plurality of devices of the building — 64a

receiving a selection by the respective inspector
of one of the plurality of devices via a user
interface of the corresponding mobile device — 64b

capturing time stamps associated with
inspection of the selected device — 64c

retrieving inspection data — 66

determining an inspection device health score for
each of the plurality of devices of the building — 68

displaying on a dashboard the inspection device
health score for one or more of the plurality of devices — 70

processing the retrieved inspection data to: — 72

remove at least some of the retrieved inspection data — 72a

add at least some derived inspection data that is derived from
the retrieved inspection data, wherein the derived inspection
data includes a number of times each device was inspected — 72b

determining an inspector rank score for each of at least some of the
plurality of inspectors, wherein each of the plurality of inspectors inspects
a subset of the plurality of devices of the building, and wherein the
inspector rank score for each inspector represents a ratio of a time
duration taken by the respective inspector to inspect all of the devices in
the subset of the plurality of devices of the building associated with the
respective inspector and a total number of devices in the subset of the
plurality of devices of the building associated with the respective inspector — 74

To FIG. 3B

FIG. 3A

~62

From FIG. 3A

displaying on the dashboard the inspector rank score for one or more of the plurality of inspectors —76

allocating inspectors for inspecting devices of a building based at least in part on the inspector rank score for each of at least some of the plurality of inspectors —78

identifying training needs for one or more of the plurality of inspectors based at least in part on the inspector rank score for each of at least some of the plurality of inspectors —80

training a generative artificial intelligent model regarding inspection tasks associated with devices of a building —82

receiving a natural language query from one of the plurality of inspectors regarding how to perform an inspection task on one or more of the devices in the building —84

providing the natural language query to the generative artificial intelligent model, and in response, the generative artificial intelligent model returning a natural language description of how to perform the inspection task identified in the natural language query —86

determining an inspection zone score for each of a plurality of zones of the building, wherein the inspection zone score for each of the plurality of zones represents a ratio of a number of devices having a device location that is in the respective zone and a total number of devices in the plurality of zones of the building, divided by a ratio of a time duration taken to inspect the devices having a device location that is in the respective zone and a predetermined time allocated to inspect all of the devices in the building —88

displaying on the dashboard the inspection zone score for one or more of the plurality of zones of the building —90

FIG. 3B

92

retrieving device data —94

determining an operator rank score for each of the plurality of operators, wherein each of the plurality of operator resolves a subset of the alarms generated by the plurality of devices of the building via a user interface of a monitoring station, and wherein the operator rank score for each operator represents a ratio of a cumulative time duration taken by the respective operator to resolve all of the alarms in the subset of the alarms generated by the plurality of devices of the building associated with the respective operator and a total number of alarms in the subset of the alarms generated by the plurality of devices of the building associated with the respective operator —96

displaying on a dashboard the operator rank score for one or more of the plurality of operators —98

determining an operator rank score for each of a plurality of different types of devices —100

determining an operator zone score for each of a plurality of zones of the building, wherein the operator zone score for each of the plurality of zones represents a ratio of a number of alarms generated by the devices having a device location that is in the respective zone and the total number of alarms generated by all of the devices in the building, divided by a ratio of the number of alarms generated in the respective zone that are acknowledged and the number of alarms generated by all of the devices in the building that are acknowledged —102

displaying on the dashboard the operator zone score for one or more of the plurality of zones of the building —104

determining an operator device health score for each of the device of the building —106

FIG. 4

108

110

retrieving inspection data, wherein the inspection data
includes, for each of a plurality of devices of the building:

| a device type | —110a |

| a device location | —110b |

| a time duration taken to
inspect the respective device | —110c |

determining an inspection zone score for each of a
plurality of zones of the building, wherein the inspection
zone score for each of the plurality of zones represents a
relative inspection efficiency for inspecting the devices that
have a device location that is in the respective zone —112

displaying on a dashboard the inspection zone score for
each of one or more of the plurality of zones of the building —114

FIG. 5

116

118

retrieving inspection data, wherein the inspection data
includes, for each of a plurality of devices of the building:

| a device type | —118a |

| a device location | —118b |

| time stamps associated with an inspection
of each of the plurality of devices | —118c |

determining a device inspection score for each of
the plurality of devices of the building, wherein the
device inspection health score represents a degree —120
at which the respective device was inspected
relative to a predetermined inspection schedule

displaying on a dashboard the device inspection
score for one or more of the plurality of devices —122

FIG. 6

124

126

retrieving device data, wherein the device data includes,
for each of a plurality of devices of the building:

| a device type | —126a |

| a device location | —126b |

| alarms generated by the respective device | —126c |

| a time duration taken to resolve each alarm of the respective device | —126d |

| an operator identifier that identifies a respective one of the plurality of operators that resolved each of the alarms of the device | —126e |

determining an operator rank score for each of the plurality
of operators, wherein each of the plurality of operator
resolves a subset of the alarms generated by the plurality
of devices of the building, and wherein the operator rank
score for each operator represents a relative operator
efficiency for acknowledging and/or resolving alarms
generated by the plurality of devices of the building

—128

displaying on a dashboard the operator rank
score for one or more of the plurality of operators

—130

FIG. 7

132

Data collection from inspection/alarms generated/Corrective Actions —134

Data pre-processing to remove unwanted information —136

Initial data analysis for validating hypotheses/trends to compare present trends with past behavior/activity —138

Scores generation step:
- Generate operator/technician ranking
- Generate zone based-score
- Generate event/device-based score
- Chat-based technician support on device issues
—140

FIG. 8

☰ Honeywell I Connected Life Safety Services

JOB DETAILS
Back

AVG TEST PER DAY

50 ▽ 5% since last month
DEVICES

AVG WORK/SESSION DURATION RATIO

0.6 ▽ 5% since last month ◄——144

WORK/TEST SESSION DURATION RATIO

◄——146

TEST PER DAY PER BUILDING

◄——148

Astra        Beta                    Sigma    Grandend
     E-Zone                                W-Zone

◄—150

| Site Info | Building Info | Building Type | Test Duration(days) | Work Duration(days) | Total devices tested | Test per day |
|-----------|---------------|---------------|---------------------|---------------------|----------------------|--------------|
| E-Zone | Beta | Office | 120 | 37 | 1242 | 33.5675676 |
| E-Zone | Astra | Office | 34 | 20 | 543 | 27.15 |
| W-Zone | Sigma | Office | 45 | 23 | 322 | 14 |
| W-Zone | Grandend | Office | 12 | 10 | 149 | 14.9 |

FIG. 9

~152

Raw Data - Before Pre-processing the data

| test SessionID | building ID | state | startDate | endDate | reopen Status | sessioin Type | created UserOld | max_ update Date |
|---|---|---|---|---|---|---|---|---|
| 15822 | 4386 | 0 | 2020-07-06 18:20:58.707 | 2020-07-06 18:34:49.160 | False | man | cbceab12-5607-4795-dadb-214a006b7ffe | 2020-07-06 18:27:41.477 |
| 15823 | 4386 | 0 | 2020-07-06 18:36:32.800 | 2020-07-06 18:45:25.180 | False | man | cbceab12-5607-4795-dadb-214a006b7ffe | 2020-07-06 18:43:36.547 |
| 15825 | 2592 | 0 | 2020-07-06 18:57:30.763 | 2020-07-06 19:01:20.707 | False | man | b1cc2e77-93lf-4dee-89a1-e77ac2001e59 | NaT |
| 15827 | 5012 | 0 | 2020-07-06 19:10:00.003 | 2020-07-06 21:30:51.970 | False | man | 342973ed-5518-4841-9cb01986f152e1289 | 2020-07-06 19:10:21.210 |
| 15828 | 4282 | 0 | 2020-07-06 19:17:12.120 | 2020-07-06 19:19:35.273 | False | man | 342973ed-5518-4841-9cb01986f152e1289 | 2020-07-06 19:17:38.347 |

FIG. 10A

~154

| test SessionID | building ID | state | startDate | endDate | reopen Status | sessioin Type | created UserOld | max_update Date | hrs_taken | devices_tested | time_taken |
|---|---|---|---|---|---|---|---|---|---|---|---|
| | | | Raw Data - Before Pre-processing the data | | | | | | ~156 | ~158 | ~160 |
| 15822 | 4386 | 0 | 2020-07-06 18:20:58.707 | 2020-07-06 18:34:49.160 | False | man | cbceab12-5607-4795-dadb-214a006b7ffe | 2020-07-06 18:27:41.477 | 0.111881 | 4 | 0 |
| 15823 | 4388 | 0 | 2020-07-06 18:36:32.800 | 2020-07-06 18:45:25.180 | False | man | cbceab12-5607-4795-dadb-214a006b7ffe | 2020-07-06 18:43:36.547 | 0.117708 | 8 | 0 |
| 15827 | 5012 | 0 | 2020-07-06 19:10:00.003 | 2020-07-06 21:30:51.970 | False | man | 342973ed-5518-4841-9cb01986f152e1289 | 2020-07-06 19:10:21.210 | 0.005891 | 4 | 0 |
| 15828 | 4282 | 0 | 2020-07-06 19:17:12.120 | 2020-07-06 19:19:35.273 | False | man | 342973ed-5518-4841-9cb01986f152e1289 | 2020-07-06 19:17:38.347 | 0.007285 | 7 | 0 |
| 15829 | 5338 | 0 | 2020-07-06 19:21:26.520 | 2020-07-06 19:24:52.503 | False | man | 342973ed-5518-4841-9cb01986f152e1289 | 2020-07-06 19:22:45.289 | 0.021850 | 12 | 0 |

FIG. 10B

162

| testSessionPointID | testSessionID | equipmentID | state | comment | lastUpdateDate | lastUpdatedUserOld |
|---|---|---|---|---|---|---|
| 1035262 | 15822 | 494305 | 0 | None | NaT | None |
| 1035260 | 15822 | 494302 | 0 | None | NaT | None |
| 1035266 | 15822 | 494308 | 2 | None | 2020-07-06 18:27:40.327 | cbceab12-5607-4795-dabd-214a006b7ffe |
| 1035267 | 15822 | 494310 | 3 | None | 2020-07-06 18:27:40.830 | cbceab12-5607-4795-dabd-214a006b7ffe |
| 1035263 | 15822 | 494306 | 0 | None | NaT | None |
| 1035258 | 15822 | 494300 | 0 | None | NaT | None |
| 1035266 | 15822 | 494309 | 0 | None | NaT | None |

FIG. 11A

164

| equipment ID | Equipment Order | building ID | equipment FunctionID | description | InstallDate | test Frequency | lastTest Date | lastTestUserOld |
|---|---|---|---|---|---|---|---|---|
| 494297 | 10.0 | 4386.0 | 242.0 | Pump Controller | NaT | 1y | 2020-07-06 18:43:06 | cbceab12-5607-4795-dadb-214a006b7ffe |
| 494298 | 11.0 | 4386.0 | 240.0 | Electric Flow Test | 2018-02-20 | 1y | 2019-01-30 16:33:44 | |
| 494299 | 6.0 | 4386.0 | 1000056.0 | Main Drain | 2018-07-24 | 1y | 2019-01-30 16:33:46 | None |
| 494300 | 2.0 | 4386.0 | 1000435.0 | Standard System Riser-Riser #1 | 2018-12-07 | 1y | 2020-07-06 18:42:52 | cbceab12-5607-4795-dadb-214a006b7ffe |
| 494301 | 9.0 | 4386.0 | 235.0 | Stand pipe Sectional Control Valve | 2018-12-13 | 1y | 2020-07-06 18:41:19 | cbceab12-5607-4795-dadb-214a006b7ffe |
| 494302 | 1.0 | 4386.0 | 1000434.0 | 1st floor control stair A | 2018-12-14 | 1y | 2021:03-19 20:27:45 | cbceab12-5607-4795-dadb-214a006b7ffe |
| 494303 | 7.0 | 4386.0 | 1000104.0 | Dry system #1 | 2019-01-14 | 1y | 2019-02-01 16:40:23 | None |
| 494304 | 6.0 | 4386.0 | 1000062.0 | Hose valves 1st floor stair A | 2019-01-30 | 1y | 2019-02-01 16:40:07 | None |

FIG. 11B

FIG. 12

EP 4 495 857 A1

☰ Honeywell | Connected Life Safety Services

Job Analytics [Yearly|Monthly]
ALL JOBS   April 2020-June 2021

JOB Distribution  View Details

**24** Total Jobs  △5% more jobs since last month

10 ///////////////////////
Houston  05 ////////
☐California  08 //////////
☐Austin  01 /

AVG Test Per Day

▯ **172** Deviceds

▽ 5% Since last month

Job Details    184

| AVG Working Duration | AVG Test Session Duration |
|---|---|
| **48** Days | **120** Days |
| △1% since last month | △1% since last month |

View Details

Device Details    186

| AVG Retested Devices | AVG Failed Device |
|---|---|
| **250** Devices | **100** Devices |
| ▽1% since last month | ▽1% since last month |

View Details

Technican Details    188        View Details

| Employee ID | Site Info | Building Info | Building Type | Work Duration (days) | TPD | Skipped Devices | Untested Devices | Performance Index | |
|---|---|---|---|---|---|---|---|---|---|
| A1M8L36 | RMZ North | Orion | Office | 60 | 80 | 5% | 5% | 62 | Details |
| A1M8L36 | S Hill-North | B1 | Hospital | 60 | 80 | 5% | 5% | 54 | Details |
| A1M8L36 | RMZ North | Phoenix | Office | 60 | 80 | 5% | 5% | 27 | Details |

FIG. 13

190

192                    194                    196

| Train generative | → | Ask natural | → | Generative AI |
| AI model |  | language query |  | model provides |
|  |  |  |  | natural language |
|  |  |  |  | answer to query |

FIG. 14

Europäisches
Patentamt

European
Patent Office

Office européen
des brevets

# EUROPEAN SEARCH REPORT

**Application Number**

EP 24 18 5931

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2005/222889 A1 (LAI CHRIS [US] ET AL) 6 October 2005 (2005-10-06) | 1-8, 10-14 | INV. G06Q10/20 |
| A | * paragraph [0034] - paragraph [0099] * | 9 | G06Q10/0639 |
| Y | US 2022/335521 A1 (MANNING CHARLES [US] ET AL) 20 October 2022 (2022-10-20) | 1-8, 10-14 | ADD. G06Q10/0631 |
| A | * paragraph [0049] - paragraph [0072]; figures 2,4,7 * | 9 | |
| A | US 2018/211262 A1 (BOWMAN JAMES D [US]) 26 July 2018 (2018-07-26) * paragraph [0241] - paragraph [0327]; figure 22 * | 1-8 | |
| A | WO 2022/147600 A1 (TOWN & COUNTRY BUILDING PTY LTD [AU]) 14 July 2022 (2022-07-14) * the whole document * | 1-8 | |
| A | US 2020/302562 A1 (TRIM CRAIG M [US] ET AL) 24 September 2020 (2020-09-24) * the whole document * | 1-9 | |

**TECHNICAL FIELDS SEARCHED (IPC)**

G06Q

The present search report has been drawn up for all claims

| Place of search | Date of completion of the search | Examiner |
|---|---|---|
| Munich | 3 December 2024 | Jullien, Sami |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 5931

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-2024

| Patent document cited in search report | Publication date | Patent family member(s) | Publication date |
|---|---|---|---|
| US 2005222889 A1 | 06-10-2005 | NONE | |
| US 2022335521 A1 | 20-10-2022 | NONE | |
| US 2018211262 A1 | 26-07-2018 | US 9836749 B1 | 05-12-2017 |
| | | US 2018211262 A1 | 26-07-2018 |
| WO 2022147600 A1 | 14-07-2022 | GB 2618266 A | 01-11-2023 |
| | | US 2024086858 A1 | 14-03-2024 |
| | | WO 2022147600 A1 | 14-07-2022 |
| US 2020302562 A1 | 24-09-2020 | NONE | |

EPO FORM P0459

For more details about this annex : see Official Journal of the European Patent Office, No. 12/82